# EUROPEAN PATENT SPECIFICATION

(11) **EP 4 166 050 B1**
(45) Date of publication and mention of the grant of the patent: **21.05.2025**
(21) Application number: 21210065.5
(22) Date of filing: 23.11.2021
(51) Int. Cl.: A47J 37/04

(54) **BARBECUE BASKET**
GRILLKORB
PANIER DE BARBECUE

(30) Priority: 12.10.2021 CN 202111190061
(43) Date of publication of application: 19.04.2023
(73) Proprietor: Haohong Electric Technology (Hubei) Co., Ltd., Huanggang, Hubei 438000 (CN)
(72) Inventor: Wang, Min, Huanggang, 438000 (CN)
(74) Representative: Monteiro Alves, Inês

(56) References cited:
- WO-A1-2017/130036
- CN-U- 209 644 718
- DE-U1- 29 916 242
- US-A- 5 771 600
- US-A1- 2019 082 883

## Description

### FIELD

The present invention relates to the technical field of cooking tools, and more particularly to a barbecue basket.

### BACKGROUND

In the existing barbecue device, different foods are fixed by forks for barbecue. However, for some foods, such as vegetables, etc., it is difficult to fix them by fork, and easy to cause food cracking and falling during barbecue. The usage of the barbecue device is limited.

US 5771600A provides a kit or an attachment apparatus for roasting a small quantity of green coffee beans upon a rotisserie unit. The kit includes a perforated, cylindrical and hollow drum that has at least one internal fin for stirring the tumbling coffee beans within the hollow drum. The drum is attachable to a spit of the rotisserie, which is, in turn, attachable to a drive motor.

US 2019082883 A1 provides a spit rod assembly configured to be mounted on a spit rod. The accessory includes at least one mounting hub having a channel for receiving the spit rod there-through, such that the accessory is movable along a length of the spit rod by moving or sliding the accessory relative to the spit rod. The mounting hub includes a locking mechanism for fixing the accessory at a selected position along the length of the spit rod. The locking mechanism includes an actuator member for manual application of a clamping force to the spit rod.

CN 209644718 U provides a barbecue appliances. The barbecue basket includes a basket body, the basket includes a first basket main body, a second basket main body, a rotating rod and a rotating piece, the first basket body and the second basket body are made of net-shaped metal materials. The whole barbecue basket is put into a barbecue box with a rotary motor.

DE 29916242 U1 provides a multipurpose roaster mainly composed of a frame, fixtures and a skewer. Two side board have a slanting sliding guide from up gradually decent with a recess and a seat at the bottom end of the sliding guide. The fixture has a hole and a bolt for a skewer to insert there through and secured by bolt thereat, or to accommodate a grid cage or a pan thereto, and slide along the sliding guide into the roaster.

### SUMMARY

The primary object of the present application is to provide a barbecue basket, aiming at improving the applicability of the barbecue device to meet the barbecue requirements of different ingredients.

For achieving the above propose, the present invention provides a barbecue basket, including:
a fixing rod; and
at least two baskets sequentially sleeved on the fixing rod in an axial direction of the fixing rod.

Each basket includes:
a basket body, a receiving space being provided inside the basket body;
two sleeves respectively provided on two opposite sides of the basket body, and the two sleeves communicating the receiving space with outside, the fixing rod sequentially passing through the two sleeves; and
two locking members, one end of each of the locking members passing through a sidewall of one of the two sleeves and abutting against the fixing rod to fix the basket body to the fixing rod.

The fixing rod is a prism structure, and the end of the locking member abuts against one of sides of the fixing rod.

The basket body includes:
a first basket body; and
a second basket body,
wherein the second basket body and the first basket body covers each other to form the receiving space;
the two sleeves are connected between the first basket body and the second basket body and connected to the first basket body or the second basket body.

The first basket body has an opening toward the second basket body, the second basket body covers the opening to enclose the first basket body to form the receiving space;
the opening has two opposite first sides and two opposite second sides, and two ends of each second side is respectively connected to the two first sides, and the two sleeves are provided on the two first sides correspondingly, wherein one of the second sides is rotatably connected to a corresponding side of the second basket body.

The basket further comprises a locking structure configured for connecting the other of second sides of the opening with a corresponding side of the second basket body to lock the receiving space.

The locking structure includes:
an elastic member provided in the first basket body, the elastic member comprising:
an elastic portion,
a clamping portion, and
a wrench portion,
wherein the elastic portion is extended from the other of the second sides in a direction away from the other of the second sides, the clamping portion is bent toward the second basket body from one end of the elastic portion away from the second side to form a clamping slot, the wrench portion is extended from a free end of the clamping portion in a direction away from the second basket body; and
a clamping member provided on a side of the second basket body corresponding to the other of the second sides, and clamped in the clamping slot.

Optionally, the barbecue basket further comprises a driving member, the driving member is rotatably connected to the fixing rod to drive the fixing rod to rotate about a center axis of the fixing rod.

Optionally, the basket is a metal material;
and/or, the basket is a mesh structure.

Optionally, one end of the fixing rod is provided with a handle.

The technical solution of the present invention takes a basket as an ingredient container, which can be used to contain fragmentary ingredients such as vegetables, avoiding the damage of ingredients and the falling of the damaged ingredients during barbecue. At the same time, since at least two baskets are sleeved on the fixing rod, it is possible to simultaneously put different ingredients for barbecue to avoid mixing ingredients, affecting the taste of the barbecued foods. That is, the technical solution of the present application improves the applicability of the barbecue basket to meet the barbecue requirements of different ingredients.

### BRIEF DESCRIPTION OF THE DRAWINGS

In order to more clearly explain the technical solutions of embodiments of the present application and the related art, the accompanying drawings needed in the embodiments or the related art will be briefly described, and obviously the drawings in the following description are only some embodiments of the present application, for those skilled in the art, other drawings can also be obtained according to the structures shown in these drawings without any creative work.
FIG. 1 is a structural view of an embodiment of a barbecue device of the present application.
FIG. 2 is a structural view of a barbecue basket in FIG. 1.
FIG. 3 is a structural view of a basket in FIG. 2.

### Description of Reference numerals:

| number | name | number | name |
|---|---|---|---|
| 100 | barbecue device | 124 | locking structure |
| 10 | barbecue basket | 1241 | elastic member |
| 11 | fixing rod | 12411 | elastic portion |
| 12 | basket | 12412 | clamping portion |
| 121 | basket body | 12413 | wrench portion |
| 1211 | first basket body | 1242 | clamping member |
| 1212 | second basket body | 13 | driving member |
| 122 | sleeve | 14 | handle |
| 123 | locking member | 20 | barbecue furnace |

The achievement of the purpose, functional characteristics and advantages of the present application will be further described with reference to the accompanying drawings.

### DETAILED DESCRIPTION OF THE EMBODIMENTS

The technical solutions in the embodiment of the present application will be clearly and completely described below in combination with the accompanying drawings in the embodiment of the present application. Obviously, the described embodiments are only some of the embodiments of the present application, not all of the embodiments.

The scope of protection of the invention is defined by the claims.

It should be noted that all directional indications (such as above, lower, left, right, front, back, ...) in the present application are only used to interpret relative positional relationships, movement conditions and so on among the components under a certain specific posture (as shown in figures), if the specific posture changes, the directional indications are changed accordingly.

In the present application, the term "connection", "fixing", etc. should be understood in a broad sense. For example, "fixing" can be a fixing connection, a detachable connection or being integrated to be one, it can be a mechanical connection or an electrical connection, it can be an direct connection or an indirect connection through an intermediate medium, it can be the communication of insides of two elements or the interaction relationship between the two elements. Unless otherwise clearly defined, for those skilled in the art, the specific meaning of the above terms in the present application can be understood according to the specific circumstances.

Further, "first", "second", etc. as described in the present application are only used for description purposes, and cannot be understood that they indicate or imply their relative importances or implicitly indicate the number of technical features indicated. Thus, the features defined with "first", "second" can indicate or implicitly include at least one of the features.

The present application proposes a barbecue basket 10.

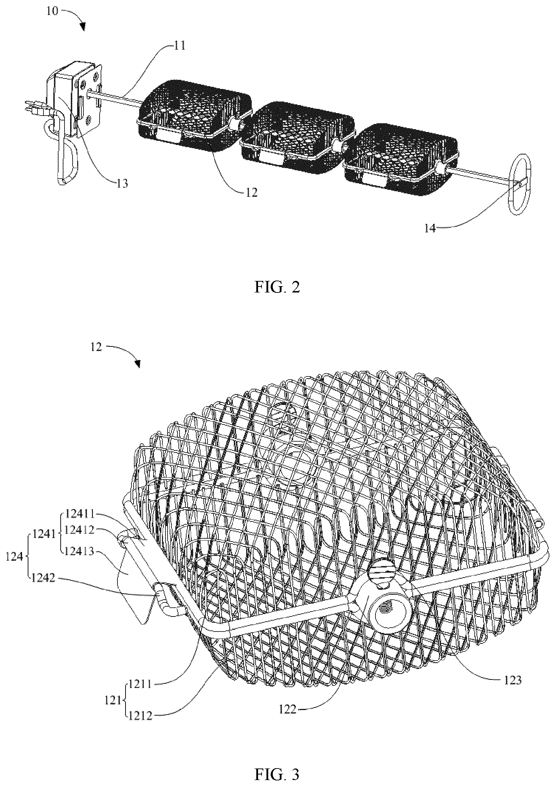

Please refer to FIG. 2, in some embodiments, the barbecue basket 10 includes:
a fixing rod 11; and
at least two baskets 12 sequentially sleeved on the fixing rod 11 in an axial direction of the fixing rod 11.

The barbecue basket 10 of the present application is provided with at least two baskets 12 configured for receiving ingredients, and a receiving space is provided inside the basket 12 for receiving ingredients. It can be understood that the basket 12 is used as an ingredient container, which can not only be used to receive larger food such as chicken and duck, but also be used to receive fragmentary foods such as vegetables, and do not damage food liking a fork does. At the same time, using two or more baskets 12 to separate foods can avoid mixing smell between different foods, and barbecue different ingredients simultaneously.

It should be noted that in the present embodiment, Each basket 12 may has an opening structure, a fully closed structure, or a mesh closed structure, which is not limited thereto.

Therefore, it is understood that the technical solution of the present application can take the basket 12 as an ingredient container, which can be used to place fragmentary ingredients such as vegetables, avoiding the damage of ingredients and the falling of the damaged ingredients during barbecue. At the same time, since at least two baskets 12 are sleeved on the fixing rod 11, it is possible to simultaneously put different ingredients for barbecue to avoid mixing ingredients and affecting a taste of the barbecued foods. That is, the technical solution of the present application improves the applicability of the barbecue basket 10 to meet the barbecue requirements of different ingredients.

In some embodiments of the barbecue basket 10 of the present application, the basket 12 is detachably connected to the fixing rod 11.

In the technical solution of the present application, at least two baskets 12 are sleeved on the fixing rod 11 to satisfy the use requirements of barbecue of different ingredients simultaneously. In the present embodiment, the basket 12 is detachable connected to the fixing rod 11, in such an arrangement, on one hand, a suitable number of baskets 12 can be fixed on the fixing rod 11 according to the actual use requirements; on the other hand, it is convenient to remove the basket 12 for cleaning. It should be noted that in the present embodiment, the detachable connection between the basket 12 and the fixing rod 11 may be, but not limited to, a threaded connection, a snap connection, or a binding fixation.

Please refer to FIGS. 2 and 3, in some embodiments of the barbecue basket 10 of the present application, the basket 12 includes:
a basket body 121, a receiving space being provided inside the basket body 121.
two sleeves 122 respectively provided on two opposite sides of the basket body 121, and the two sleeves 122 communicating the receiving space with outside, the fixing rod 11 passing through the two sleeves 122 in sequence; and
two locking members 123, one end of each of the locking members 123 passing through a sidewall of the sleeve 122 and abutting against the fixing rod 11 to fix the basket body 121 to the fixing rod 11.

In the technical solution of the aforementioned embodiment, the basket 12 is detachably connected to facilitate to put a suitable number of baskets 12 on the fixing rod 11. In this embodiment, each basket 12 includes a basket body 121 and sleeves 122 provided on the basket body 121, and the sleeves 122 are two and the two sleeves are respectively provided on two opposite sides of the basket body 121, the fixing rod 11 passes through the two sleeves 122 in sequence. At the same time, two locking members 123 are provided on the basket 12, each of the two locking members 123 is provided corresponding to a sleeve 122, and one end of the locking member 123 passes through a sidewall of the sleeve 122 from outside of the sleeve 122 and abuts against a sidewall of the fixing rod 11 to fix the basket 12 to the fixing rod 11, such arrangement can make the basket 12 be maintained a relatively fixing position on the fixing rod 11, and avoid that the basket 12 moves in the axial direction of the fixing rod 11. When to detach the basket 12, it only needs to pull out the locking member 123, so that the locking member 123 does not abut against the fixing rod 11, and the basket 12 is free to slip out. In this embodiment, the locking members 123 passes through the sidewall of the sleeve 122 and abuts against the fixing rod 11 to fix, which can freely adjust the position of the basket 12 on the fixing rod 11, and needn't to open a mounting hole on the fixing rod 11, so that the fixing rod 11 maintains a high structural strength to ensure the service life of the fixing rod 11.

In some embodiments of the barbecue basket 10 of the present application, the sidewall of each sleeve 122 is defined with a screw hole, each locking member 123 is provided with an external thread, and the locking member 123 is threaded with the sleeve 122.

In this embodiment, the locking member 123 is threaded with the sleeve 122, and it only needs to rotate the locking member 123 so that the locking member 123 moves in its axial direction to be close to or away from the fixing rod 11, the structure is simple, and the operation is more convenient. In an alternative embodiment, one end of the locking member 123 away from the fixing rod is provided with a holding portion, which is convenient for the user to screw by hand, the holding portion may be a circular grip shown in the figures, or a butterfly holding portion similar to a butterfly bolt. The specific shape and structure of the holding portion is not limited here, but only needs to be convenient for the user to screw by hand.

Please refer to FIG. 2, in some embodiments of the barbecue basket 10 of the present application, the fixing rod 11 is a prism structure, and one end of the locking member 123 abuts against one of sides of the fixing rod 11.

In the technical solution of the aforementioned embodiment, the fixing rod 11 passes through the sidewall of the sleeve 122 and abuts against the fixing rod 11 to fix the basket 12 on the fixing rod 11. In the present embodiment, the fixing rod 11 is of a prism structure, and one end of the locking member 123 passes through the sidewall of the sleeve 122 and abuts against one of sidewalls of the fixing rod 11. It should be understood that if the fixing rod 11 is of a cylindrical structure, since the side of the cylindrical structure is an arc surface, the abutment of the locking member 123 against the fixing rod 11 is linear, and thus relative rotation is easily caused, when the fixing rod 11 is of a prism structure, the side surfaces of the prism structure are planes, so that an abutment area between the locking member 123 and the fixing rod 11 is increased, and thus the friction between the locking member 123 and the fastening rod 11 is increased, avoiding that the fixing rod 11 rotates relative to the locking member 123. It should be noted that in the present embodiment, the fixing rod 11 has a prism structure, and can be, but is not limited to, a triangular prism, a square prism, a pentaprism, or the like.

Please refer to FIG. 3, in some embodiments of the barbecue basket 10 of the present application, the basket body 121 includes:
a first basket body 1211; and
a second basket body 1212, the second basket body 1212 and the first basket body 1211 covering each other to form the receiving space;
the two sleeve 122 being sandwiched between the first basket body 1211 and the second basket body 1212 and being connected to the first basket body 1211 or the second basket body 1212.

In the present embodiment, the basket body 121 includes a first basket body 1211 and a second basket body 1212 which are provided opposite to each other and covering each other. The first basket body 1211 and the second basket body 1212 are enclosed to form the receiving space. With such arrangement, foreign objects can be prevented from falling into the receiving space during barbecue, and foods in the receiving space can be prevented from falling out when moving the basket 12. In some embodiments, the closed barbecue basket 10 enables the basket 12 to be turned over during the barbecue to heat the food evenly.

Please refer to FIG. 3, in some embodiments of the barbecue basket 10 of the present application, the first basket body 1211 has an opening toward the second basket body 1212, the second basket body 1212 covers the opening to form the receiving space. The opening has two opposite first sides and two opposite second sides, two ends of each second side are respectively connected to the two first sides, and the two sleeves 122 are provided at the two first sides correspondingly, one of the second sides is rotatably connected to a corresponding side of the second basket body 1212.

In a technical solution of the aforementioned embodiment, the first basket body 1211 and the second basket body 1212 covers each other to form the receiving space. In this embodiment, a containing cavity is provided in the first basket body 1211, and the first basket body 1211 is defined with an opening communicating with the containing cavity and facing the second basket body 1212, and the second basket body 1212 covers the opening to close the containing cavity to form the receiving space. The opening has two first sides and two second sides connected between the two first sides. At this time, the two sleeves 122 are respectively provided on the two first sides, and one of the second sides is rotatably connected with a corresponding side of the second basket body 1212. With such arrangement, it only needs to make the first basket body 1211 and the second basket body 1212 rotate relative to each other to open the receiving space and put or take foods, and the operation is facilitated. It should be understood that during barbecue, the first basket body 1211 and the second basket body 1212 need to maintain a structural form of mutual covering. At this time, the first basket body 1211 and the second basket body 1212 can remain mutual fixation through other components. Its fixing mode can be a buckle connection or binding fixation, etc. to avoid food falling due to that the receiving space itself opens during the barbecue.

It should be noted that in the present embodiment, the second basket body 1212 can be of a planar structure to cover the opening of the first basket body 1211, or the second basket body 1212 can be of a basket-shaped structure, in which a containing cavity is also defined with an opening facing the first basket body 1211. The opening of the first basket body 1211 and the opening of the second basket body 1212 are provided opposite to each other, and the first basket body 1211 and the second basket body 1212 cover each other, such that the containing cavity of the first basket body 1211 and the containing cavity of the second basket body 1212 form the aforementioned receiving space.

Please refer to FIG. 3, in some embodiments of the barbecue basket 10 of the present application, the basket 12 further includes a locking structure 124 configured for connecting another second side of the opening with a corresponding side of the second basket body 1212 to lock the receiving space.

In the technical solution of the aforementioned embodiment, the first basket body 1211 and the second basket body 1212 cover each other to form the receiving space. In this embodiment, the first basket body 1211 is rotatably connected with one of the second sides of the second basket body 1212, and the locking structure 124 is provided on the basket 12, the locking structure 124 is provided between the other second side of the first basket body 1211 and a side of the second basket body 1212 corresponding to the other second side of the first basket body 1211 to connect the other second side of the first basket body 1211 with the corresponding side of the second basket body 1212, avoiding the receiving space being opened to cause foods to fall during barbecue. It is only needed to release the locking structure 124 when to put or take foods. Alternatively, the locking structure 124 may be, but not limited to, a clamping structure, a bolted connection structure, a magnetic structure or a binding structure, which is not limited thereto.

Please refer to FIG. 3, in some embodiments of the barbecue basket 10 of the present application, the locking structure 124 includes:
an elastic member 1241, the elastic member 1241 includes an elastic portion 12411 and a clamping portion 12412 connected with each other, the elastic portion 12411 extends from the second side in a direction away from the second side, the clamping portion 12412 is bent toward the second basket body 1212 from one end of the elastic portion 12411 away from the second side to form a clamping slot; and
a clamping member 1242 provided on a side of the second basket body 1212 corresponding to the second side, and being clamped in the clamping slot.

In the technical solution of the foregoing embodiment, the locking structure 124 is provided to lock the receiving space of the basket 12. In this embodiment, the locking structure 124 includes an elastic member 1241 provided in the first basket body 1211 and a clamping member 1242 provided in the second basket body 1212. The elastic member 1241 includes an elastic portion 12411 and a clamping portion 12412 connected with each other. The elastic portion 12411 extends from the second side of the first basket body 1211 in a direction away from the first basket body 1211, the clamping portion 12412 is bent toward the second basket body 1212 from one end of the elastic portion 12411 away from the second side 1212 to form a clamping slot. At this time, the clamping portion 12412 on the second basket body 1212 can be provided in the clamping slot to cause the first basket body 1211 and the second basket body 1212 to enclose, avoiding foods to fall out. When the foods are needed to be taken out or put in, it only needs to move the elastic member 1241, such that the elastic member 1241 moves away from the second basket body 1212 to cause the clamping member 1242 to be released from the clamping slot, thus the locking is released.

Further, in some embodiments of the barbecue basket 10 of the present application, the elastic member 1241 further includes a wrench portion 12413, the wrench portion 12413 extends from a free end of the clamping portion 12412 in a direction away from the second basket body 1212.

In this embodiment, the elastic member 1241 is provided with a wrench portion 12413, and the wrench portion 12413 extends from a free end of the clamping portion 12412 in a direction away from the second basket body 1212, facilitating the user to operate the elastic member 1241, thereby improving the convenience of the operation.

In some embodiments, the fixing member on the second basket body 1212 is in a shape of a handle, which can be used to cooperate with the elastic member 1241 to lock the receiving space, and also to facilitate the user to take and move the basket 12.

Please refer to FIG. 2, in some embodiments of the barbecue basket 10 of the present application, the barbecue basket 10 further includes a driving member 13, the driving member 13 is rotatably connected with the fixing rod 11 to drive the fixing rod 11 to rotate about its center axis.

In the technical solution of the aforementioned embodiment, the basket 12 for placing food is sleeved on the fixing rod 11 to simultaneously place different ingredients for barbecue. In this embodiment, the barbecue basket 10 further includes a driving member 13, the driving member 13 is rotatably connected with the fixing rod 11 to drive the fixing rod 11 to rotate. It should be understood that at this time, the basket 12 is fixed to the fixing rod 11, and the basket 12 is formed by enclosing the first basket body 1211 and the second basket body 1212. When the driving member 13 drives the fixed rod 11 to rotate, the basket 12 rotates together with the fixed rod 11 to heat all positions of the ingredients in the receiving space evenly and improve the barbecue efficiency.

Please refer to FIG. 2, in some embodiments of the barbecue basket 10 of the present application, one end of the fixing rod 11 is provided with a handle 14.

In the technical solution of the present application, the fixing rod 11 for fixing the basket 12 is provided in the barbecue basket 10. In the present embodiment, one end of the fixing rod 11 is provided with a handle 14, facilitating the user to take the fixing rod 11 to move the basket 12, thereby improving using security. In some using environment, the user can rotate the fixing rod 11 through the handle to rotate the basket 12, such that the ingredients in the basket 12 are heated evenly.

In some embodiments of the barbecue basket 10 of the present application, the basket 12 is a metal material.

In the technical solution of the present application, there is provided a basket 12 for placing ingredients, which can be used to place fragmentary ingredients such as vegetables, thereby improving the applicability of the barbecue basket 10. In the present embodiment, the basket 12 is a metal material, with such arrangement, the better thermal conductivity of the metal can help to transfer heat to each position of the basket 12, so as to heat the food in the basket 12 evenly and improve the heating efficiency of ingredients.

Please refer to FIG. 3, in some embodiments of the barbecue basket 10 of the present application, the basket 12 is a mesh structure.

In the technical solution of the present application, there is provided a basket 12 for placing ingredients, which can be used to place fragmentary ingredients such as vegetables, thereby improving the applicability of the barbecue basket 10. In the present embodiment, the basket 12 is a mesh structure, with such arrangement, the barbecue flame can contact directly with the ingredients, thereby improving the heat efficiency of the ingredients. Preferably, the basket 12 is a metal mesh structure, the good thermal conductivity of metal can be relied, the barbecue flame can directly contact with ingredients, which further enhances the heating efficiency of ingredients.

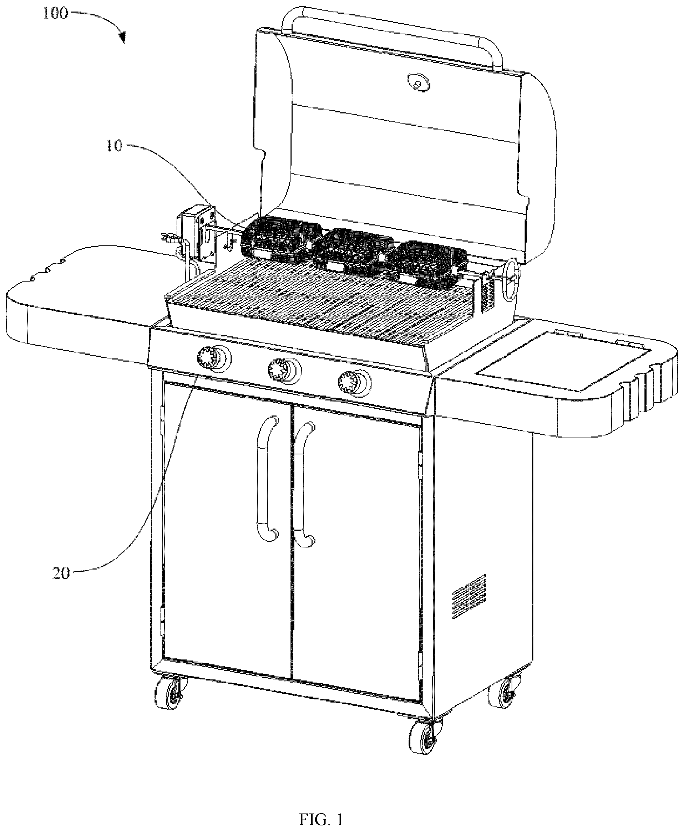

Please refer to FIG. 1, the present application also proposes a barbecue device 100 including a barbecue basket 10 which is any one of the barbecue baskets 10 described above, and a specific structure of the barbecue basket 10 refers to the foregoing embodiments. Since the barbecue device 100 adopts all of the technical solutions of all of the above embodiments, therefore, at least all the beneficial effects brought by all the technical solutions of all the above embodiments are included, which will not be repeated here.

The barbecue device 100 usually further includes a barbecue furnace 20, the barbecue basket 10 is provided in the barbecue furnace 20, and the barbecue furnace 20 provides barbecue flames and is used as a barbecue bracket to raise the barbecue basket 10 and barbecues the ingredients in the barbecue basket 10.

The above is only the optional embodiments of the present application and does not limit the patent scope of the present invention, which is defined by the claims.

## Claims

1. A barbecue basket (10) comprising:
a fixing rod (11); and
at least two baskets (12) sequentially sleeved on the fixing rod (11) in an axial direction of the fixing rod (11);
**characterized in that**, each basket (12) comprises:
a basket body (121), a receiving space being provided inside the basket body (121);
two sleeves (122) respectively provided on two opposite sides of the basket body (121), and the two sleeves (122) communicating the receiving space with outside, the fixing rod (11) sequentially passing through the two sleeves (122); and
two locking members (123), one end of each of the locking members (123) passing through a sidewall of one of the two sleeves (122) and abutting against the fixing rod (11) to fix the basket body (121) to the fixing rod (11);
the fixing rod (11) is a prism structure, and the end of the locking member (123) abuts against one of sides of the fixing rod (11),
the basket body (121) comprises:
a first basket body (1211); and
a second basket body (1212),
wherein the second basket body (1212) and the first basket body (1211) covers each other to form the receiving space;
the two sleeves (122) are connected between the first basket body (1211) and the second basket body (1212) and connected to the first basket body (1211) or the second basket body (1212),
the first basket body (1211) has an opening toward the second basket body (1212), the second basket body (1212) covers the opening to enclose the first basket body (1211) to form the receiving space;
the opening has two opposite first sides and two opposite second sides, and two ends of each second side is respectively connected to the two first sides, and the two sleeves (122) are provided on the two first sides correspondingly, wherein one of the second sides is rotatably connected to a corresponding side of the second basket body (1212),
the basket (12) further comprises a locking structure (124) configured for connecting the other of second sides of the opening with a corresponding side of the second basket body (1212) to lock the receiving space,
the locking structure (124) comprises:
an elastic member (1241) provided in the first basket body (1211), the elastic member (1241) comprising:
an elastic portion (12411),
a clamping portion (12412), and
a wrench portion (12413),
wherein the elastic portion (12411) is extended from the other of the second sides in a direction away from the other of the second sides, the clamping portion (12412) is bent toward the second basket body (1212) from one end of the elastic portion (12411) away from the second side to form a clamping slot, the wrench portion (12413) is extended from a free end of the clamping portion (12412) in a direction away from the second basket body (1212); and
a clamping member (1242) provided on a side of the second basket body (1212) corresponding to the other of the second sides, and clamped in the clamping slot.

2. The barbecue basket (10) according to claim 1, wherein the barbecue basket (10) further comprises a driving member (13), the driving member (13) is rotatably connected to the fixing rod (11) to drive the fixing rod (11) to rotate about a center axis of the fixing rod (11).

3. The barbecue basket (10) according to any one of claims 1 and 2, wherein the basket (12) is a metal material;
and/or, the basket (12) is a mesh structure.

4. The barbecue basket (10) according to any one of claims 1 and 2, wherein one end of the fixing rod (11) is provided with a handle (14).

## Patentansprüche

1. Grillkorb (10), umfassend:
eine Befestigungsstange (11); und
mindestens zwei Körbe (12), die in axialer Richtung der Befestigungsstange (11) nacheinander auf die Befestigungsstange (11) aufgesetzt werden;
**dadurch gekennzeichnet, dass** jeder Korb (12) umfasst:
einen Korbkörper (121), wobei im Inneren des Korbkörpers (121) ein Aufnahmeraum vorgesehen ist;
zwei Hülsen (122), die jeweils an zwei gegenüberliegenden Seiten des Korbkörpers (121) vorgesehen sind, wobei die beiden Hülsen (122) den Aufnahmeraum mit der Außenseite verbinden und die Befestigungsstange (11) nacheinander durch die beiden Hülsen (122) hindurchgeht; und
zwei Verriegelungselemente (123), wobei ein Ende jedes der Verriegelungselemente (123) durch eine Seitenwand einer der beiden Hülsen (122) hindurchgeht und an der Befestigungsstange (11) anliegt, um den Korbkörper (121) an der Befestigungsstange (11) zu befestigen;
wobei die Befestigungsstange (11) eine Prismenstruktur aufweist und das Ende des Verriegelungselements (123) an einer der Seiten der Befestigungsstange (11) anliegt,
wobei der Korbkörper (121) umfasst:
einen ersten Korbkörper (1211); und
einen zweiten Korbkörper (1212),
wobei der zweite Korbkörper (1212) und der erste Korbkörper (1211) einander abdecken, um den Aufnahmeraum zu bilden;
wobei die beiden Hülsen (122) zwischen dem ersten Korbkörper (1211) und dem zweiten Korbkörper (1212) verbunden sind und mit dem ersten Korbkörper (1211) bzw. dem zweiten Korbkörper (1212) verbunden sind,
wobei der erste Korbkörper (1211) eine Öffnung zum zweiten Korbkörper (1212) aufweist und der zweite Korbkörper (1212) die Öffnung abdeckt, um den ersten Korbkörper (1211) zu umschließen und dAufnahmeraum zu bilden;
wobei die Öffnung zwei gegenüberliegende erste Seiten und zwei gegenüberliegende zweite Seiten hat, und zwei Enden jeder zweiten Seite jeweils mit den beiden ersten Seiten verbunden sind, und die beiden Hülsen (122) entsprechend an den beiden ersten Seiten vorgesehen sind, wobei eine der zweiten Seiten drehbar mit einer entsprechenden Seite des zweiten Korbkörpers (1212) verbunden ist,
wobei der Korb (12) ferner eine Verriegelungsstruktur (124) umfasst, die dazu konfiguriert ist, die andere der zweiten Seiten der Öffnung mit einer entsprechenden Seite des zweiten Korbkörpers (1212) zu verbinden, um den Aufnahmeraum zu verriegeln,
wobei die Verriegelungsstruktur (124) umfasst:
ein elastisches Element (1241), das in dem ersten Korbkörper (1211) vorgesehen ist, wobei das elastische Element (1241) umfasst:
einem elastischen Abschnitt (12411),
einen Klemmabschnitt (12412), und
einen Schraubenschlüsselabschnitt (12413),
wobei sich der elastische Abschnitt (12411) von der anderen der zweiten Seiten in eine Richtung weg von der anderen der zweiten Seiten erstreckt, wobei der Klemmabschnitt (12412) von einem Ende des elastischen Abschnitts (12411) weg von der zweiten Seite in Richtung des zweiten Korbkörpers (1212) gebogen ist, um einen Klemmschlitz zu bilden, wobei der Schraubenschlüsselabschnitt (12413) sich von einem freien Ende des Klemmabschnitts (12412) in eine Richtung weg vom zweiten Korbkörper (1212) erstreckt; und
ein Klemmelement (1242), das auf einer Seite des zweiten Korbkörpers (1212) vorgesehen ist, die der anderen der zweiten Seiten entspricht, und in den Klemmschlitz geklemmt wird.

2. Grillkorb (10) nach Anspruch 1, wobei der Grillkorb (10) ferner ein Antriebselement (13) umfasst, wobei das Antriebselement (13) drehbar mit der Befestigungsstange (11) verbunden ist, um die Befestigungsstange (11) anzutreiben, so dass sie sich um eine Mittelachse der Befestigungsstange (11) dreht.

3. Grillkorb (10) nach einem der Ansprüche 1 bis 2, wobei der Korb (12) aus einem metallischen Material besteht;
und/oder der Korb (12) eine Netzstruktur ist.

4. Grillkorb (10) nach einem der Ansprüche 1 bis 2, wobei ein Ende der Befestigungsstange (11) mit einem Griff (14) versehen ist.

## Revendications

1. Panier de barbecue (10) comprenant :
une barre de fixation (11) ; et
au moins deux paniers (12) manchonnés successivement sur la barre de fixation (11) dans une direction axiale de la barre de fixation (11) ;
**caractérisé en ce que** chaque panier (12) comprend :
un corps de panier (121), un espace de réception étant prévu à l'intérieur du corps de panier (121) ;
deux manchons (122) disposés respectivement sur deux côtés opposés du corps de panier (121), les deux manchons (122) communiquant l'espace de réception avec l'extérieur et la barre de fixation (11) passant successivement à travers les deux manchons (122) ; et
deux éléments de verrouillage (123), une extrémité de chacun des éléments de verrouillage (123) passant à travers une paroi latérale de l'un des deux manchons (122) et
étant aboutée contre la barre de fixation (11) pour fixer le corps de panier (121) à la barre de fixation (11) ;
la barre de fixation (11) est une structure de prisme, et l'extrémité de l'élément de verrouillage (123) est aboutée contre l'un des côtés de la barre de fixation (11),
le corps de panier (121) comprend :
un premier corps de panier (1211) ; et
un second corps de panier (1212),
dans lequel le second corps de panier (1212) et le premier corps de panier (1211) se recouvrent l'un l'autre pour former l'espace de réception ;
les deux manchons (122) sont reliés entre le premier corps de panier (1211) et le second corps de panier (1212) et reliés au premier corps de panier (1211) ou au second corps de panier (1212),
le premier corps de panier (1211) comporte une ouverture orientée vers le second corps de panier (1212), le second corps de panier (1212) recouvre l'ouverture pour entourer le premier corps de panier (1211) pour former l'espace de réception ;
l'ouverture comporte deux premiers côtés opposés et deux seconds côtés opposés, et deux extrémités de chaque second côté sont reliées aux deux premiers côtés respectivement, et
les deux manchons (122) sont disposés en correspondance sur les deux premiers côtés, l'un des seconds côtés étant relié de manière rotative à un côté correspondant du second corps de panier (1212),
le panier (12) comprend en outre une structure de verrouillage (124) configurée pour relier l'autre des seconds côtés de l'ouverture à un côté correspondant du second corps de panier (1212) pour verrouiller l'espace de réception,
la structure de verrouillage (124) comprend :
un élément élastique (1241) disposé dans le premier corps de panier (1211), l'élément élastique (1241) comprenant :
une portion élastique (12411),
une portion de serrage (12412), et
une portion de clé (12413),
dans lequel la portion élastique (12411) s'étend à partir de l'autre des seconds côtés dans une direction éloignée de l'autre des seconds côtés, la portion de serrage (12412) se courbe vers le second corps de panier (1212) à partir d'une extrémité de la portion élastique (12411) éloignée du second côté pour former une fente de serrage, la portion de clé (12413) s'étend à partir d'une extrémité libre de la portion de serrage (12412) dans une direction éloignée du second corps de panier (1212) ; et
un élément de serrage (1242) prévu sur un côté du second corps de panier (1212) correspondant à l'autre des seconds côtés, et serré dans la fente de serrage.

2. Panier de barbecue (10) selon la revendication 1, dans lequel le panier de barbecue (10) comprend en outre un élément d'entraînement (13), l'élément d'entraînement (13) est relié de manière rotative à la barre de fixation (11) pour entraîner la barre de fixation (11) à tourner autour d'un axe central de la barre de fixation (11).

3. Panier de barbecue (10) selon l'une quelconque des revendications 1 à 2, dans lequel le panier (12) est en matériau métallique ;
et/ou, le panier (12) est une structure en maille.

4. Panier de barbecue (10) selon l'une quelconque des revendications 1 à 2, dans lequel une extrémité de la barre de fixation (11) est pourvue d'une poignée (14).
